# EUROPEAN PATENT APPLICATION

(11) **EP 4 450 376 A1**
(43) Date of publication of application: **23.10.2024**
(21) Application number: 22906172.6
(22) Date of filing: 17.11.2022
(51) Int. Cl.: B62K 15/00

(54) **ELECTRIC CONTROL ROTATING ARM LOCKING DEVICE AND AUTOMATIC FOLDING VEHICLE**

(30) Priority: 13.12.2021 CN 202111515191
(71) Applicant: Shu, JiFeng, Chengdu, Sichuan 611130 (CN)
(72) Inventor: Shu, JiFeng, Chengdu, Sichuan 611130 (CN)
(74) Representative: Zaboliene, Reda
(86) International application number: PCT/CN2022/132465
(87) International publication number: WO 2023/109420

(57) **Abstract**

The present invention discloses a locking apparatus for electrically controlled rotating arm and an automatically folding cart. The locking apparatus for electrically controlled rotating arm includes a first rotating arm and a second rotating arm that are rotatably connected. The first rotating arm is provided with a first locking mechanism, and the first locking mechanism includes a first rotating member and a second rotating member. The second rotating arm is fixedly provided with a third rotating member. The second rotating arm is provided with a second locking mechanism, and the second locking mechanism cooperates with the second rotating member to lock or unlock the first rotating arm and the second rotating arm. In the present invention, through the cooperation of the first rotating member provided in the first rotating arm and the third rotating member provided in the second rotating arm, the port docking of the first rotating arm and the second rotating arm are achieved. Then, the second rotating member of the first rotating arm cooperates with the second locking mechanism in the second rotating arm to perform the locking action. As the locking process of the rotating arm is divided into two steps of docking and locking, which are executed by corresponding structures, the locking stability between the locking arms and the unlocking flexibility can be ensured.

## Description

### FIELD OF TECHNOLOGY

The present invention relates to the field of rotating arm control technologies, particularly to a locking apparatus for electrically controlled rotating arm and an automatically folding cart.

### BACKGROUND

In daily life and production processes, it is usually necessary to fix and lock two rotating arms to ensure high stability when the rotating arms are locked and a large rotation angle when they are unlocked, thereby meeting the demands for flexibility and stability during control over the rotating arms. For example, rotating arms need to be fixed and locked when a frame of an automatically folding cart is folded. However, the existing rotating arm locking apparatus typically operates manually, which is inefficient and time-consuming. If an electrically controlled linkage mechanism is used, its structure is complex, bulky, and unattractive, with unstable motor power output and difficulty in achieving large-angle rotation. If a worm and worm gear rotating arm is used, a meshing gap causes the rotating arm to shake, and the output torque of the rotating arm is limited due to the strength limitation of worm and worm gear meshing teeth. Therefore, how to improve the stability of locking two rotating arms and the flexibility of unlocking them is a technical problem to be resolved urgently.

The above content is only for assisting in understanding the technical solutions of the present invention and does not imply that the above content is prior art.

### SUMMARY

A main objective of the present invention is to provide a locking apparatus for electrically controlled rotating arm and an automatically folding cart, aiming to resolve the technical problems of low stability in locking and low flexibility in unlocking in the existing rotating arm control methods.

To achieve the foregoing objective, the present invention provides a locking apparatus for electrically controlled rotating arm, including a first rotating arm and a second rotating arm, where the first rotating arm is provided with a first cavity, and the second rotating arm is provided with a second cavity.

The first cavity is provided with a locking drive apparatus and a first locking mechanism, the first locking mechanism includes a first rotating member and a second rotating member, and the locking drive apparatus drives the first rotating member and the second rotating member to perform rotating actions.

The second rotating arm is fixedly provided with a third rotating member, and the third rotating member cooperates with the rotating action of the first rotating member to drive the second rotating arm to rotate, so as to dock end surfaces of the first rotating arm and the second rotating arm.

The second cavity is provided with a second locking mechanism, and the second locking mechanism cooperates with the second rotating member, to lock the first rotating arm and the second rotating arm when the locking apparatus for electrically controlled rotating arm is docked, and to unlock the first rotating arm and the second rotating arm when the locking apparatus for electrically controlled rotating arm is folded.

In the present invention, through the cooperation of the first rotating member provided in the first rotating arm and the third rotating member provided in the second rotating arm, the docking or folding of the first rotating arm and the second rotating arm are achieved. Then, the second rotating member of the first rotating arm cooperates with the second locking mechanism in the second rotating arm to perform the locking or unlocking action, ensuring the flexibility and stability of the locking apparatus.

Optionally, the first rotating member is a worm, the second rotating member is a screw, the worm is disposed on the screw, and when the locking drive apparatus controls the screw to perform a first rotating action, the worm follows the screw to perform a second rotating action.

In the present invention, the worm follows the rotation of the screw so that when the screw performs the first rotating action, the worm performs the second rotating action, thereby achieving the docking and locking processes. One drive device is used to drive two components to rotate, so as to achieve two actions, simplifying the structure of the locking apparatus.

Optionally, the third rotating member is a worm gear, the worm gear meshes with the worm, and the worm gear follows the second rotating action of the worm to perform a third rotating action, to drive the second rotating arm to rotate.

In the present invention, the worm gear follows the rotation of the worm so that when the worm performs the second rotating action, the worm gear performs the third rotating action, thereby achieving the docking and locking processes. One drive device is used to drive two components to rotate, so as to achieve two actions, simplifying the structure of the locking apparatus.

Optionally, a first protrusion is provided in the first cavity, the first locking mechanism further includes a worm stop block, and the worm stop block is disposed on a side of the first protrusion for cancelling out, when the locking apparatus for electrically controlled rotating arm is docked, a reaction force applied by the worm gear to the worm.

In the present invention, as the first protrusion is provided to block the movement of the worm stop block, the reaction force applied by the worm gear to the worm is canceled out, optimizing the force structure and improving the stability of the locking apparatus for electrically controlled rotating arm.

Optionally, the first cavity is provided with a second protrusion.

The first locking mechanism further includes a worm sleeve, the worm sleeve sleeves the worm, the worm sleeve is provided with a worm sleeve stop block, and the worm sleeve stop block is disposed on a side of the second protrusion.

A pulley is disposed at an end of the second rotating arm, and when the locking apparatus for electrically controlled rotating arm is unlocked, the pulley comes into contact with the worm sleeve stop block to fix a position of the second rotating arm. In the present invention, with the arrangement of the pulley, the position of the second rotating arm is fixed when the locking apparatus for electrically controlled rotating arm is unlocked, preventing the second rotating arm from performing a rotating action before unlocked.

Optionally, the pulley is a D-type pulley, and a flat surface of the D-type pulley is parallel to the second rotating arm, such that after end surfaces of the first rotating arm and the second rotating arm are docked, the worm sleeve follows the rotation of the worm to move left and right within a flat surface space of the D-type pulley.

In the present invention, with the arrangement of the D-type pulley, after the end faces of the first rotating arm and the second rotating arm are docked, a space is formed for the worm sleeve to move left and right at the flat surface of the D-type pulley, facilitating the unlocking action.

Optionally, the second locking mechanism is a nut, when the locking apparatus for electrically controlled rotating arm is docked, the screw meshes with the nut, to lock the first rotating arm and the second rotating arm, and when the locking apparatus for electrically controlled rotating arm is folded, the screw is separated from the nut, to unlock the first rotating arm and the second rotating arm.

In the present invention, as the nut is provided in the second rotating arm to cooperate with the screw in the first rotating arm, locking and unlocking actions are performed, improving the stability of the locking apparatus.

Optionally, a spring is disposed in the second cavity, and the spring is in contact with the second locking mechanism to provide the second locking mechanism with a force towards the second rotating member when the locking apparatus for electrically controlled rotating arm is docked.

In the present invention, with the arrangement of the spring in the second cavity, a force towards the second rotating member is provided for the second locking mechanism during docking, which is conducive for the second locking mechanism to mesh with the second rotating member, thus improving the meshing stability. Optionally, the locking apparatus for electrically controlled rotating arm further includes a dustproof cover disposed outside the locking apparatus for electrically controlled rotating arm, and the dustproof cover matches the locking apparatus for electrically controlled rotating arm in shape.

In the present invention, the dustproof cover is provided outside the locking apparatus for electrically controlled rotating arm, and a shape-matching structure is provided at the pulley of the dustproof cover, facilitating the movement of the pulley when the locking apparatus for electrically controlled rotating arm is folded or docked.

Additionally, to achieve the above objective, the present invention further provides an automatically folding cart, which includes the locking apparatus for electrically controlled rotating arm as described above.

In the present invention, the locking apparatus for electrically controlled rotating arm includes a first rotating arm and a second rotating arm. The first rotating arm is provided with a first locking mechanism, and the first locking mechanism includes a first rotating member and a second rotating member. The second rotating arm is fixedly provided with a third rotating member. The second rotating arm is provided with a second locking mechanism, and the second locking mechanism cooperates with the second rotating member to lock the first rotating arm and the second rotating arm. In the present invention, through the cooperation of the first rotating member provided in the first rotating arm and the third rotating member provided in the second rotating arm, the port docking of the first rotating arm and the second rotating arm are achieved. Then, the second rotating member of the first rotating arm cooperates with the second locking mechanism in the second rotating arm to perform the locking action. As the locking process of the rotating arm is divided into two steps of docking and locking, which are executed by corresponding structures, the locking stability between the locking arms and the unlocking flexibility can be ensured.

### BRIEF DESCRIPTION OF THE DRAWINGS

To describe the technical solutions in the embodiments of the present invention or in the prior art more clearly, the following briefly describes the accompanying drawings required for describing the embodiments or the prior art.
FIG. 1 is a schematic structural diagram of a locking apparatus for electrically controlled rotating arm according to the present invention;
FIG. 2 is a schematic structural diagram of the locking apparatus for electrically controlled rotating arm being docked according to the present invention;
FIG. 3 is a schematic structural diagram of the locking apparatus for electrically controlled rotating arm being locked according to the present invention; and
FIG. 4 is a schematic structural diagram of a dustproof cover according to the present invention.

Numeral references in the drawings are described below:

| Numeral reference | Name | Numeral reference | Name |
|---|---|---|---|
| 1 | First rotating arm | 8 | Worm stop block |
| 2 | Second rotating arm | 9 | Worm sleeve |
| 3 | Locking drive apparatus | 10 | Worm sleeve stop block |
| 4 | First rotating member | 11 | Pulley |
| 5 | Second rotating member | 12 | Spring |
| 6 | Third rotating member | 13 | Dustproof cover |
| 7 | Second locking mechanism | | |

The realization of the objective, functional features and advantages of the present invention will be further described with reference to the embodiments and the accompanying drawings.

### DESCRIPTION OF THE EMBODIMENTS

It should be understood that the specific embodiments described herein are merely used to explain the present invention but are not intended to limit the present invention.

In daily life and production processes, it is usually necessary to fix and lock two rotating arms to ensure high stability when the rotating arms are locked and a large rotation angle when they are unlocked, thereby meeting the demands for flexibility and stability during control over the rotating arms. For example, rotating arms need to be fixed and locked when a frame of an automatically folding cart is folded. However, the existing rotating arm locking apparatus typically operates manually, which is inefficient and time-consuming. If an electrically controlled linkage mechanism is used, its structure is complex, bulky, and unattractive, with unstable motor power output and difficulty in achieving large-angle rotation. If a worm and worm gear rotating arm is used, a meshing gap causes the rotating arm to shake, and the output torque of the rotating arm is limited due to the strength limitation of worm and worm gear meshing teeth. Therefore, how to improve the stability of locking two rotating arms and the flexibility of unlocking them is a technical problem to be resolved urgently.

To resolve this problem, various embodiments of the locking apparatus for electrically controlled rotating arm of the present invention are provided. According to the locking apparatus for electrically controlled rotating arm provided by the present invention, through the cooperation of the first rotating member provided in the first rotating arm and the third rotating member provided in the second rotating arm, the port docking of the first rotating arm and the second rotating arm are achieved. Then, the second rotating member of the first rotating arm cooperates with the second locking mechanism in the second rotating arm to perform the locking action. As the locking process of the rotating arm is divided into two steps of docking and locking, which are executed by corresponding structures, the stability of locking between the locking arms and the flexibility of unlocking can be ensured. The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of present invention without creative efforts shall fall within the protection scope of present invention.

It should be noted that all directional indications (for example, up, down, left, right, front, and rear) in the embodiments of the present invention are used solely for explaining the relative positional relationships and movements between components in a specific posture (as shown in the drawings). If the specific posture changes, these directional indications also change accordingly.

In addition, the technical solutions in different embodiments can be combined with each other, but they must be based on what ordinary skilled personnel in this field can achieve. When the combination of technical solutions results in mutual contradictions or becomes unfeasible, such combination should be considered non-existent, and it is also not within the protection scope required by the present invention.

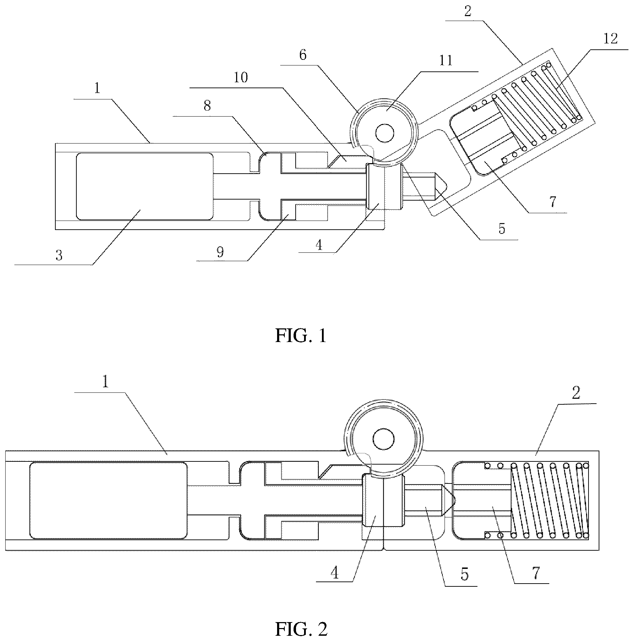

Referring to FIG. 1, FIG. 1 is a schematic structural diagram of a locking apparatus for electrically controlled rotating arm according to the present invention.

As shown in FIG. 1, in an embodiment, a locking apparatus for electrically controlled rotating arm is provided, including a first rotating arm 1 and a second rotating arm 2 that are rotatably connected. The first rotating arm 1 is provided with a first cavity, and the second rotating arm 2 is provided with a second cavity.

Specifically, the first cavity is provided with a locking drive apparatus 3 and a first locking mechanism. The first locking mechanism includes a first rotating member 4 and a second rotating member 5. The locking drive apparatus 3 is connected to the first rotating member and drives the first rotating member 4 and the second rotating member 5 provided on the first rotating member to perform rotating actions.

It is easily understood that the first rotating member 4 may be a worm, and the second rotating member 5 is a screw, with the worm provided on the screw. The locking drive apparatus 3 is a speed reduction motor, and when the reduction motor controls the screw to perform a first rotating action, the worm follows the screw to perform a second rotating action.

The second rotating arm 2 is fixedly provided with a third rotating member 6. The third rotating member 6 cooperates with the rotating action of the first rotating member 4, driving the second rotating arm 2 to rotate and docking the first rotating arm 1 with the second rotating arm 2. The second cavity is provided with a second locking mechanism 7, and the second locking mechanism 7 cooperates with the second rotating member 5, to lock the first rotating arm 1 and the second rotating arm 2 when the locking apparatus for electrically controlled rotating arm is docked, and to unlock the first rotating arm 1 and the second rotating arm 2 when the locking apparatus for electrically controlled rotating arm is folded.

It is easily understood that the third rotating member 6 is a worm gear, the worm gear meshes with the worm, and the worm gear follows the second rotating action of the worm to perform a third rotating action, to drive the second rotating arm 2 to rotate. In this embodiment, the worm follows the rotation of the screw so that when the screw performs the first rotating action, the worm performs the second rotating action, thereby achieving the docking and locking processes. One drive device is used to drive two components to rotate, to achieve two actions, simplifying the structure of the locking apparatus.

It is easily understood that to achieve the docking action of end surfaces of the first rotating arm 1 and the second rotating arm 2, the first cavity is provided with a first protrusion. The first locking mechanism further includes a worm stop block 8, which is set on one side of the first protrusion. When the locking apparatus for electrically controlled rotating arm is docked, the worm stop block 8 cancels out the reaction force applied to the worm when the worm gear follows the worm to perform the third rotating action.

It is easily understood that to achieve the docking action of end surfaces of the first rotating arm 1 and the second rotating arm 2, the first cavity is provided with a second protrusion. The first locking mechanism further includes a worm sleeve 9, the worm sleeve 9 sleeving the worm. The worm sleeve 9 can slide left and right in a restricted manner within the first cavity of the first rotating arm 1. The worm sleeve is provided with a worm sleeve stop block 10, and the worm sleeve stop block 10 is provided on a side of the second protrusion. An end of the second rotating arm 2 is provided with a pulley, and the pulley contacts the worm sleeve stop block when the locking apparatus for electrically controlled rotating arm is unlocked, fixing the position of the second rotating arm.

Further, the pulley is a D-type pulley, and a flat surface of the D-type pulley is parallel to the second rotating arm 2, such that after the end surfaces of the first rotating arm 1 and the second rotating arm 2 are docked, the worm sleeve 9 follows the rotation of the worm to move left and right within a flat surface space of the D-type pulley. In this embodiment, a space is created for the worm sleeve to move left and right at the flat surface of the D-type pulley after the end surfaces of the first and second rotating arms are docked, facilitating the unlocking action.

In another embodiment, the second locking mechanism 7 is a nut, when the locking apparatus for electrically controlled rotating arm is docked, the screw meshes with the nut, to lock the first rotating arm 1 and the second rotating arm 2, and when the locking apparatus for electrically controlled rotating arm is folded, the screw is separated from the nut, to unlock the first rotating arm and the second rotating arm. It should be noted that a spring 12 is also disposed in the second cavity, and the spring 12 is in contact with the second locking mechanism 7 to provide the second locking mechanism with a force towards the second rotating member when the locking apparatus for electrically controlled rotating arm is docked, improving the effect of the second locking mechanism 7 meshing with the second rotating member 5.

The operation principle of the locking apparatus for electrically controlled rotating arm is as follows:
During the docking action, as shown in FIG. 1, the speed reduction motor rotates forward and drives the screw to rotate. In this case, the worm gear rotates clockwise, so the second rotating arm 2 rotates clockwise. The worm receives a reverse force to the right from the worm gear, causing the worm to tend to slide left or right. To maintain the position of the worm, the support force of the first rotating arm 1 on the worm stop block 8 can be used to cancel out the tendency of the worm to slide. The reaction force of the arc surface of the D-type pulley on the worm sleeve 9 stop block can also cancel out the tendency of the worm to slide, thereby controlling the second rotating arm 2 to rotate only clockwise, making the end surface of the second rotating arm 2 rotate in the direction for overlapping with the end surface of the first rotating arm 1.

As shown in FIG. 2, the speed reduction motor continues to rotate forward. When the first rotating arm 1 and the second rotating arm 2 horizontally overlap, the second rotating arm 2 cannot rotate any more, that is, the worm gear does not rotate. In this case, the flat surface of the D-type pulley is horizontal, leaving space, such that the worm sleeve 9 stop block can slide to the right, and the worm drives the worm sleeve 9 to move to the right. The speed reduction motor continues to rotate forward, and the worm drives the worm sleeve 9 to continuously move to the right until the screw on the right section of the worm meshes with the nut in the second rotating arm 2. The spring 12 inside the second rotating arm 2 ensures more effective meshing therebetween.

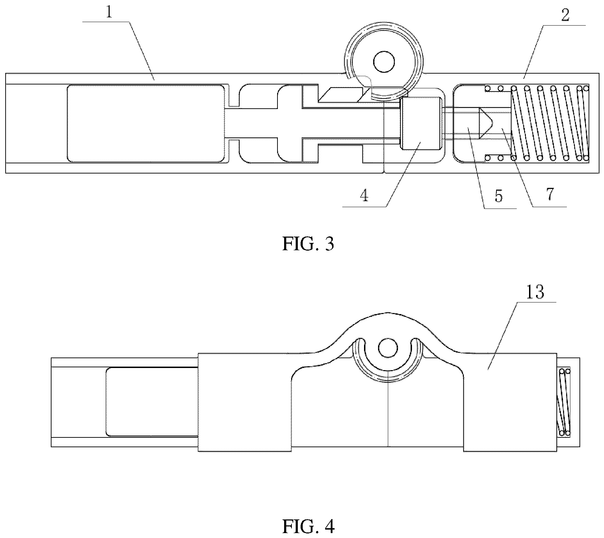

During the locking action, as shown in FIG. 3, the speed reduction motor continues to rotate. When the worm and the worm gear separate, the nut in the second rotating arm 2 moves to the left, the worm stop block 8 presses the worm sleeve 9 stop block to the right, and then the worm sleeve 9 stop block presses the first rotating arm 1 to the right, thereby locking the first rotating arm 1 and the second rotating arm 2.

During the unlocking action, the speed reduction motor reverses and drives the screw to rotate. In this case, the nut in the second rotating arm 2 moves to the right, and under the action of the spring 12, the screw moves to the left until it meshes with the worm gear. Due to the action of the worm sleeve 9 stop block and the D-type pulley, the second rotating arm 2 and worm gear remain fixed and cannot rotate. As the speed reduction motor continues to reverse until the worm retracts to a left dead point, the worm sleeve 9 disengages from the D-type pulley, and the worm rotates to drive the worm gear to rotate counterclockwise, causing the second rotating arm 2 to rotate in the opposite direction. At this moment, the first rotating arm 1 and the second rotating arm 2 are unlocked.

As shown in FIG. 4, to achieve external protection for the locking apparatus for electrically controlled rotating arm, a dustproof cover 13 can be provided outside the locking apparatus for electrically controlled rotating arm. The dustproof cover 13 matches the locking apparatus for electrically controlled rotating arm in shape. That is, a placement space is provided at the corresponding positions of the D-type pulley and the worm gear in the dustproof cover 13, so as to not obstruct its rotating and locking actions, while protecting the locking apparatus for electrically controlled rotating arm.

In still another embodiment, an automatically folding cart is also provided, which includes the foregoing locking apparatus for electrically controlled rotating arm.

The automatically folding cart further includes a power supply battery and a control assembly. The power supply battery is connected to the locking apparatus for electrically controlled rotating arm via wires, providing power for the locking apparatus for electrically controlled rotating arm to perform rotating, locking, and unlocking actions. The control assembly is used to send control instructions to the locking apparatus for electrically controlled rotating arm to drive it to perform corresponding actions, achieving automatic folding and automatic recovery of the automatically folding cart.

In this embodiment, the automatically folding cart is provided. When the automatically folding cart is self-folding, the locking apparatus for electrically controlled rotating arm is used to automatically fold the frame, ensuring that the space occupied by the automatically folding cart after folding is sufficiently small. The above is only a preferred embodiment of the present invention and does not limit the scope of the patent of the present invention. Any equivalent structure or equivalent process transformation made using the content of the description and the accompanying drawings of the present invention, or directly or indirectly applied to other related technical fields, are equally included in the protection scope of the present invention.

## Claims

1. A locking apparatus for electrically controlled rotating arm, comprising a first rotating arm and a second rotating arm that are rotatably connected, wherein the first rotating arm is provided with a first cavity, and the second rotating arm is provided with a second cavity; wherein
the first cavity is provided with a locking drive apparatus and a first locking mechanism, the first locking mechanism comprises a first rotating member and a second rotating member, and the locking drive apparatus drives the first rotating member and the second rotating member to perform rotating actions;
the second rotating arm is fixedly provided with a third rotating member, and the third rotating member cooperates with the rotating action of the first rotating member to drive the second rotating arm to rotate; and
the second cavity is provided with a second locking mechanism, and the second locking mechanism cooperates with the second rotating member, to lock the first rotating arm and the second rotating arm when the locking apparatus for electrically controlled rotating arm is docked, and to unlock the first rotating arm and the second rotating arm when the locking apparatus for electrically controlled rotating arm is folded.

2. The locking apparatus for electrically controlled rotating arm according to claim 1, wherein the first rotating member is a worm, the second rotating member is a screw, the worm is disposed on the screw, and when the locking drive apparatus controls the screw to perform a first rotating action, the worm follows the screw to perform a second rotating action.

3. The locking apparatus for electrically controlled rotating arm according to claim 2, wherein the third rotating member is a worm gear, the worm gear meshes with the worm, and the worm gear follows the second rotating action of the worm to perform a third rotating action, to drive the second rotating arm to rotate.

4. The locking apparatus for electrically controlled rotating arm according to claim 3, wherein a first protrusion is provided in the first cavity, the first locking mechanism further comprises a worm stop block, and the worm stop block is disposed on a side of the first protrusion for cancelling out, when the locking apparatus for electrically controlled rotating arm is docked, a reaction force applied by the worm gear to the worm.

5. The locking apparatus for electrically controlled rotating arm according to claim 3, wherein the first cavity is provided with a second protrusion: wherein
the first locking mechanism further comprises a worm sleeve, the worm sleeve sleeves the worm, the worm sleeve is provided with a worm sleeve stop block, and the worm sleeve stop block is disposed on a side of the second protrusion; and
a pulley is disposed at an end of the second rotating arm, and when the locking apparatus for electrically controlled rotating arm is unlocked, the pulley comes into contact with the worm sleeve stop block to fix a position of the second rotating arm.

6. The locking apparatus for electrically controlled rotating arm according to claim 5, wherein the pulley is a D-type pulley, and a flat surface of the D-type pulley is parallel to the second rotating arm, such that after end surfaces of the first rotating arm and the second rotating arm are docked, the worm sleeve follows the rotation of the worm to move left and right within a flat surface space of the D-type pulley.

7. The locking apparatus for electrically controlled rotating arm according to claim 2, wherein the second locking mechanism is a nut, when the locking apparatus for electrically controlled rotating arm is docked, the screw meshes with the nut, to lock the first rotating arm and the second rotating arm, and when the locking apparatus for electrically controlled rotating arm is folded, the screw is separated from the nut, to unlock the first rotating arm and the second rotating arm.

8. The locking apparatus for electrically controlled rotating arm according to claim 7, wherein a spring is disposed in the second cavity, and the spring is in contact with the second locking mechanism to provide the second locking mechanism with a force towards the second rotating member when the locking apparatus for electrically controlled rotating arm is docked.

9. The locking apparatus for electrically controlled rotating arm according to claim 1, further comprising a dustproof cover disposed outside the locking apparatus for electrically controlled rotating arm, and the dustproof cover matches the locking apparatus for electrically controlled rotating arm in shape.

10. An automatically folding cart, comprising the locking apparatus for electrically controlled rotating arm according to any one of claims 1 to 9.
